# EUROPEAN PATENT APPLICATION

(11) **EP 4 685 915 A1**
(43) Date of publication of application: **28.01.2026**
(21) Application number: 24774556.5
(22) Date of filing: 21.02.2024
(51) Int. Cl.: H01M 10/0587, H01M 4/134, H01M 4/36, H01M 4/38, H01M 10/04, H01M 10/052, H01M 50/449, H01M 50/46, H01M 50/489

(54) **SECONDARY BATTERY**

(30) Priority: 23.03.2023 JP 2023046162
(71) Applicant: Panasonic Intellectual Property Management Co., Ltd., Kadoma-shi, Osaka 571-0057 (JP)
(72) Inventor: SHIRANE, Takayuki, Kadoma-shi, Osaka 571-0057 (JP)
(74) Representative: Novagraaf International SA
(86) International application number: PCT/JP2024/006188
(87) International publication number: WO 2024/195411

(57) **Abstract**

A secondary battery (10) according to one embodiment of the present disclosure is provided with a wound electrode body (14) in which a positive electrode (11) and a negative electrode (12) are wound with a separator (13) interposed therebetween. The secondary battery (10) is characterized in that the separator (13) includes a first separator (31) facing a first surface (11A) on the winding inner side of the positive electrode (11), and a second separator (32) facing a second surface (11B) on the winding outer side of the positive electrode (11), the ratio of the static friction coefficient of the surface on the winding outer side of the first separator (31) in contact with the first surface (11A) of the positive electrode (11) to the static friction coefficient of the surface on the winding inner side of the second separator (32) in contact with the second surface (11B) of the positive electrode (11) being 1.3 or more.

## Description

### TECHNICAL FIELD

The present disclosure relates to a secondary battery.

### BACKGROUND ART

Conventionally, secondary batteries in which a wound electrode assembly with a strip-like positive electrode and a strip-like negative electrode wound around a separator is housed in a metallic outer housing can have been widely used. The separator prevents short-circuits caused by the positive electrode and the negative electrode coming into contact with each other from occurring. Patent Literature 1 discloses a technique for suppressing winding misalignment when removing the wound positive electrode and negative electrode from a winding shaft by setting a coefficient of static friction of a surface of the separator opposing the positive electrode higher than a coefficient of static friction of a surface of the separator opposing the negative electrode.

### CITATION LIST

### PATENT LITERATURE

PATENT LITERATURE 1: Japanese Unexamined Patent Application Publication No. 2012-195296

### SUMMARY

With the increase in capacity of secondary batteries in recent years, the expansion of the negative electrode mixture layer during charging and discharging has become more significant. When the negative electrode mixture layer expands significantly, stress inside the battery increases and a stress load on electrode plates increases. Accordingly, the electrode plates may deform and cause a decline in battery performance, an occurrence of an internal short-circuit, and the like.

An object of the present disclosure is to provide a secondary battery capable of suppressing deformation of electrode plates caused by charging and discharging.

A secondary battery that is an aspect of the present disclosure is a secondary battery comprising a wound electrode assembly in which a positive electrode and a negative electrode are wound around a separator, wherein the separator includes a first separator that opposes a first surface of the positive electrode on a winding inner side and a second separator that opposes a second surface of the positive electrode on a winding outer side, and a ratio of a coefficient of static friction of a surface of the first separator on the winding outer side in contact with the first surface of the positive electrode to a coefficient of static friction of a surface of the second separator on the winding inner side in contact with the second surface of the positive electrode is greater than or equal to 1.3.

According to the secondary battery of the present disclosure, deformation of electrode plates caused by charging and discharging can be suppressed.

### BRIEF DESCRIPTION OF DRAWINGS

FIG. 1 is a sectional view in an axial direction of a cylindrical battery that is an example of an embodiment.
FIG. 2 is a diagram showing a portion of a cross section in a lateral direction of a wound electrode assembly included in the cylindrical battery that is an example of the embodiment.
FIG. 3 is a diagram showing a portion of a cross section in a lateral direction of a wound electrode assembly included in a cylindrical battery that is another example of the embodiment.
FIG. 4A is an X-ray CT image of a cross-sectional shape of a cylindrical battery used in a simulation of an example.
FIG. 4B is an image of a calculation model used in the simulation of the example.
FIG. 5 is a diagram showing physical property values used in the simulation of the example.
FIG. 6 is a diagram showing a simulation result of Comparative Example 1.

### DESCRIPTION OF EMBODIMENT

In a secondary battery comprising a wound electrode assembly, when a negative electrode mixture layer expands due to charging and discharging, a normal force on a surface of a positive electrode on a winding outer side tends to be greater than a normal force on a surface of the positive electrode on a winding inner side. In a conventional secondary battery, since two identical separators are usually used so as to sandwich the positive electrode, a coefficient of static friction of the surface of the separator that comes into contact with the surface of the positive electrode on the winding inner side and a coefficient of static friction of the surface of the separator that comes into contact with the surface of the positive electrode on the winding outer side are the same. Since a force of friction is represented as a product of a coefficient of static friction and a normal force, in a conventional secondary battery, the force of friction on the surface of the positive electrode on the winding outer side is greater than the force of friction on the surface of the positive electrode on the winding inner side. As a result, deformation of electrode plates caused by charging and discharging may be promoted and may cause a decline in battery performance, an occurrence of an internal short-circuit, and the like.

The present inventors found that deformation of the electrode plates caused by charging and discharging is suppressed by setting a ratio of a coefficient of static friction of a surface of a separator in contact with a surface of a positive electrode on a winding inner side to a coefficient of static friction of a surface of a separator in contact with a surface of the positive electrode on a winding outer side to greater than or equal to 1.3. In the secondary battery according to the present disclosure, since the coefficient of static friction of the surface of a separator that comes into contact with a surface of the positive electrode on the winding inner side is greater than the coefficient of static friction of the surface of the separator that comes into contact with a surface of the positive electrode on the winding outer side, a force of friction on the surface of the positive electrode on the winding outer side and a force of friction on the surface of the positive electrode on the winding inner side can be brought close to each other. As a result, deformation of electrode plates attributable to a difference in forces of friction between the surface of the positive electrode on the winding inner side and the surface of the positive electrode on the winding outer side caused by charging and discharging can be suppressed.

Hereinafter, an example of an embodiment of a secondary battery according to the present disclosure will be described in detail with reference to the drawings. The embodiment described below is merely an example and the present disclosure is not limited to the following embodiment. In addition, configurations created by selectively combining respective constituent elements of the embodiment described below are included in the scope of the present disclosure. In addition, when the term "approximately" is used in the present specification, it is used with the same meaning as the term "more or less" and a requirement expressed by "approximately ...." is satisfied when the referent is substantially the same.

While a cylindrical battery in which a wound electrode assembly is housed in a cylindrical bottomed outer housing can will be exemplified below, the outer housing can of the battery is not limited to a cylindrical outer housing can and may be, for example, a rectangular outer housing can (rectangular battery) or an outer housing can constituted of a laminate sheet including a metal layer and a resin layer (laminated battery).

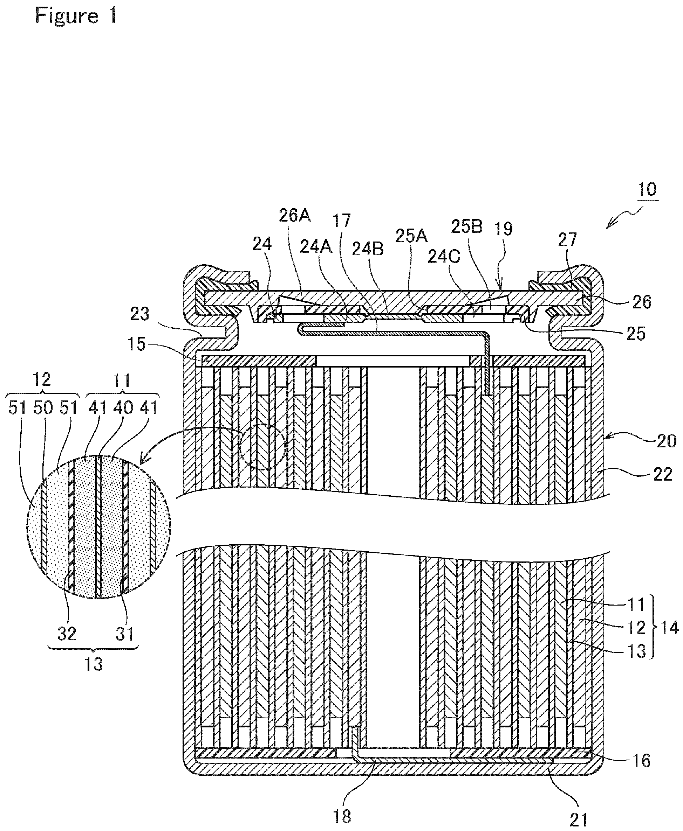

FIG. 1 is a diagram schematically showing a cross section of a cylindrical battery (hereinafter, simply referred to as a battery) 10 that is an example of the embodiment. As shown in FIG. 1, the battery 10 comprises an electrode assembly 14, a non-aqueous electrolyte (not illustrated), and an outer housing can 20 that houses the electrode assembly 14 and the non-aqueous electrolyte. The electrode assembly 14 has a positive electrode 11, a negative electrode 12, and a separator 13 and has a wound structure in which the positive electrode 11 and the negative electrode 12 are wound in a spiral shape around the separator 13. More specifically, the electrode assembly 14 has a structure in which the positive electrode 11 and the negative electrode 12 are wound around a first separator 31 arranged on a winding inner side of the positive electrode 11 and a second separator 32 arranged on a winding outer side of the positive electrode 11. The outer housing can 20 is a cylindrical bottomed metal container with one side in an axial direction opened, and the opening of the outer housing can 20 is sealed by a sealing assembly 19. Note that in FIG. 1, the number of winding turns shown is less than is actually the case in order to make an arrangement relationship among the positive electrode 11, the negative electrode 12, and the separator 13 in the electrode assembly 14 easier to understand. Hereinafter, a side of the sealing assembly 19 in the axial direction (height direction) of the battery 10 will be referred to as "up or above" and a side of a bottom portion of the outer housing can 20 in the axial direction will be referred to as "down or below"

The non-aqueous electrolyte has ionic conductivity (for example, lithium-ion conductivity). The non-aqueous electrolyte may be a liquid electrolyte (electrolytic solution) or a solid electrolyte.

The liquid electrolyte (electrolytic solution) contains a non-aqueous solvent and an electrolyte salt dissolved in the non-aqueous solvent. As the non-aqueous solvent, for example, esters, ethers, nitriles, amides, and mixtures of two or more of these substances are used. Examples of the non-aqueous solvent include ethylene carbonate (EC), ethyl methyl carbonate (EMC), dimethyl carbonate (DMC), diethyl carbonate (DEC), and a mixture of these solvents. The non-aqueous solvent may contain halogen substitutes (for example, fluoroethylene carbonate) in which at least some of the hydrogen of the solvents is replaced with halogen atoms such as fluorine. For example, lithium salts such as LiPF₆ are used as the electrolyte salts.

As the solid electrolyte, for example, a solid or gel polymer electrolyte, an inorganic solid electrolyte, or the like is used. A polymer electrolyte contains, for example, a lithium salt and a matrix polymer or a non-aqueous solvent, a lithium salt, and a matrix polymer. As the matrix polymer, for example, a polymer material that absorbs a non-aqueous solvent and becomes a gel is used. As the polymer material, for example, fluororesins, acrylic resins, polyether resins, and the like are used. As the inorganic solid electrolyte, for example, known materials used in all-solid-state lithium-ion secondary batteries and the like (for example, oxide-based solid electrolytes, sulfide-based solid electrolytes, and halide-based solid electrolytes) are used.

The positive electrode 11, the negative electrode 12, and the separator 13 which constitute the electrode assembly 14 are all long, strip-like bodies which are wound in a spiral shape and stacked alternately in a radial direction of the electrode assembly 14. The negative electrode 12 is formed slightly larger than the positive electrode 11 in order to prevent lithium precipitation. In other words, the negative electrode 12 is formed longer than the positive electrode 11 in a longitudinal direction and a width direction (transverse direction). The separator 13 is formed slightly larger than at least the positive electrode 11, and two separators 13 are arranged so as to sandwich the positive electrode 11. The battery 10 comprises insulating plates 15 and 16 arranged above and below the electrode assembly 14, respectively.

A positive electrode lead 17 is connected to the positive electrode 11 and a negative electrode lead 18 is connected to a winding start-side of the negative electrode 12. The positive electrode lead 17 extends through a through-hole in the insulating plate 15 to the sealing assembly 19, and the negative electrode lead 18 extends through a through-hole in the insulating plate 16 to the bottom portion 21 of the outer housing can 20. The positive electrode lead 17 is connected to a lower surface of an internal terminal plate 24 of the sealing assembly 19 by welding or the like to make the sealing assembly 19 a positive electrode terminal. In addition, the negative electrode lead 18 is connected to an inner surface of the bottom portion 21 of the metallic outer housing can 20 by welding or the like to make the outer housing can 20 a negative electrode terminal.

The outer housing can 20 is a cylindrical bottomed metal container with one side in the up-down direction opened. The outer housing can 20 has the bottom portion 21 and a side wall portion 22. The side wall portion 22 is a portion of the outer housing can 20 excluding the bottom portion 21 and a grooved portion 23 to be described later is formed in the side wall portion 22.

A gasket 27 is provided between the outer housing can 20 and the sealing assembly 19 to ensure sealability of the interior of the battery and insulation properties between the outer housing can 20 and the sealing assembly 19. A grooved portion 23 which is a part of the side wall portion 22 projecting inward and which supports the sealing assembly 19 is formed in the outer housing can 20. The grooved portion 23 is preferably formed in an annular shape along a circumferential direction of the outer housing can 20 and supports the sealing assembly 19 with an upper surface thereof. The sealing assembly 19 is fixed to an upper part of the outer housing can 20 by the grooved portion 23 and an opening end portion of the outer housing can 20 which is crimped with respect to the sealing assembly 19.

The sealing assembly 19 is a disk-shaped member comprising a safety valve. The sealing assembly 19 has a structure in which the internal terminal plate 24, an insulating member 25, and a rupture plate 26 are stacked in order from a side of the electrode assembly 14. The internal terminal plate 24 is a metal plate that includes a thick-walled outer circumferential portion 24A to which the positive electrode lead 17 is connected and a thin-walled central portion 24B that is detached from the outer circumferential portion 24A when the internal pressure of the battery exceeds a predetermined threshold. A plurality of vent holes 24C are formed in the outer circumferential portion 24A.

The rupture plate 26 is arranged opposite the internal terminal plate 24 across the insulating member 25. In the insulating member 25, an opening portion 25A is formed in a central portion in a radial direction and vent holes 25B are formed in a portion that overlaps with the vent holes 24C of the internal terminal plate 24. The rupture plate 26 has a valve portion 26A that ruptures when the internal pressure of the battery 10 exceeds a predetermined threshold, and the valve portion 26A is welded or otherwise connected to the central portion 24B of the internal terminal plate 24. The insulating member 25 insulates portions other than a connecting portion between the central portion 24B and the valve portion 26A. In addition, an outer circumferential portion that encloses the valve portion 26A of the rupture plate 26 is held in place, via a gasket 27, between a crimped portion formed by bending the opening of the outer housing can 20 inward and the grooved portion 23.

The valve portion 26A includes a joined portion that is provided at center in the radial direction and protrudes toward the inside of the battery and a thin-walled portion that is formed around the joined portion, and the valve portion 26A is formed in a central portion in the radial direction of the rupture plate 26. The joined portion of the valve portion 26A is joined with the central portion 24B through inside the opening portion 25A of the insulating member 25. When an abnormality occurs in the battery 10 and the internal pressure rises, the generated high-temperature gas pushes the rupture plate 26 upward, ruptures the internal terminal plate 24, separates the central portion 24B from the outer circumferential portion 24A, and the valve portion 26A deforms so as to protrude toward the outside of the battery. Accordingly, a current path in the sealing assembly 19 is interrupted. When the internal pressure of the battery 10 rises further after the interruption of the current path, the thin-walled portion of the valve portion 26A ruptures and an exhaust port for gas is formed in the rupture plate 26.

Note that the structure of the sealing assembly 19 is not limited to the structure shown in FIG. 1. The sealing assembly 19 may have a laminated structure including two vent members or have a convex sealing assembly cap that covers the vent members.

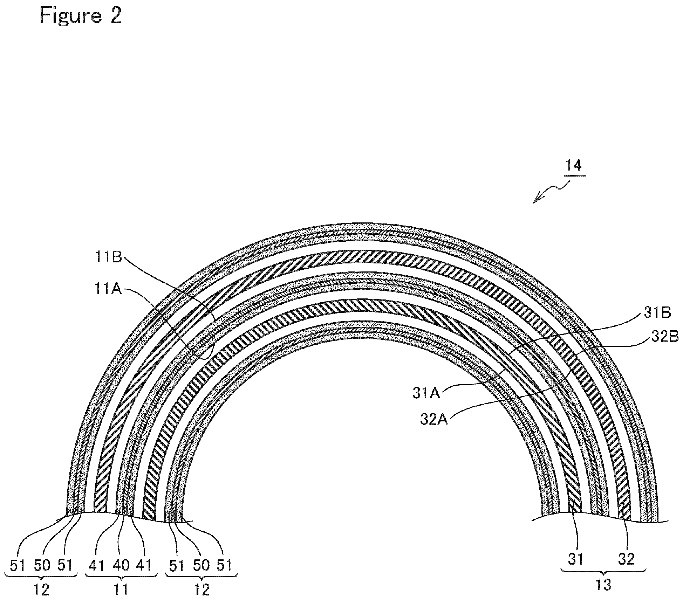

Hereinafter, the electrode assembly 14 will be described in detail with reference to FIG. 2.

FIG. 2 is a diagram showing a portion of a cross section in a lateral direction of the wound electrode assembly 14 for describing an arrangement of the positive electrode 11, the negative electrode 12, and the separator 13 that constitute the electrode assembly 14. Note that in FIG. 2, the positive electrode 11, the negative electrode 12, and the separator 13 are shown with more space between the respective layers than is actually the case in order to make an arrangement relationship among the positive electrode 11, the negative electrode 12, and the separator 13 easier to understand.

### [Positive Electrode]

As shown in FIGS. 1 and 2, the positive electrode 11 includes a positive electrode core 40 and a positive electrode mixture layer 41 arranged on the positive electrode core 40. As the positive electrode core 40, a foil of a metal that is stable in a potential range of the positive electrode 11 such as aluminum or an aluminum alloy and a film with the metal arranged on a surface layer can be used. The positive electrode mixture layer 41 includes a positive electrode active material, a conductive agent, and a binding agent. For example, the positive electrode 11 can be fabricated by coating the positive electrode core 40 with a positive electrode mixture slurry containing the positive electrode active material, the conductive agent, the binding agent, and the like, letting the coating film dry, and then compressing the positive electrode 11 to form the positive electrode mixture layer 41 on both surfaces of the positive electrode core 40.

The positive electrode mixture layer 41 contains a granulated lithium metal composite oxide as the positive electrode active material. A lithium metal composite oxide is a composite oxide containing metal elements such as Co, Mn, Ni, and Al in addition to Li. The metal element comprising the lithium metal composite oxide is at least one selected from the group consisting of, for example, Mg, Al, Ca, Sc, Ti, V, Cr, Mn, Fe, Co, Ni, Cu, Zn, Ga, Ge, Y, Zr, Sn, Sb, W, Pb, and Bi. Among these metal elements, at least one selected from the group consisting of Co, Ni, Al and Mn is preferable. Examples of suitable composite oxides include a lithium metal composite oxide containing Ni, Co, and Mn and a lithium metal composite oxide containing Ni, Co, and Al.

For example, the lithium-containing composite oxide is secondary particles formed by agglomeration of a plurality of primary particles. While a volume-based median diameter (D50) of the composite oxide is not particularly limited, in one example, D50 is greater than or equal to 3 µm and less than or equal to 30 µm and preferably greater than or equal to 5 µm and less than or equal to 25 µm. When the composite oxide is secondary particles made up of an aggregation of primary particles, the D50 of the composite oxide means the D50 of the secondary particles. D50 means a particle diameter at which a cumulative frequency in a particle size distribution on a volumetric basis is 50% from the smallest particle diameter and is also referred to as a medium diameter. The particle size distribution of the composite oxide (a similar description applies to the negative electrode active material) can be measured using a laser diffraction particle size distribution analyzer (for example, MT3000II manufactured by MicrotracBEL Corp.) and using water as a dispersion medium.

An average particle diameter of the primary particles constituting the lithium-containing composite oxide is, for example, greater than or equal to 0.05 µm and less than or equal to 1 µm. The average particle diameter of the primary particles is calculated by averaging diameters of circumscribed circles of primary particles extracted by an analysis of a scanning electron microscope (SEM) image of a secondary particle cross-section.

Examples of the conductive agent included in the positive electrode mixture layer 41 include carbon black such as acetylene black and Ketjen black, graphite, carbon nanotubes (CNT), carbon nanofibers, graphene, and other carbon materials. Examples of the binding agent included in the positive electrode mixture layer 41 include fluorinated resins such as polytetrafluoroethylene (PTFE) and polyvinylidene fluoride (PVDF), polyacrylonitrile (PAN), polyimide, acrylic resins, and polyolefin. In addition, these resins may be used in combination with carboxymethyl cellulose (CMC) or its salts, polyethylene oxide (PEO), and the like.

### [Negative Electrode]

As shown in FIGS. 1 and 2, the negative electrode 12 includes a negative electrode core 50 and a negative electrode mixture layer 51 arranged on the negative electrode core 50. As the negative electrode core 50, a foil of a metal that is stable in a potential range of the negative electrode 12 such as copper or a copper alloy or a film with the metal arranged on a surface layer can be used. The negative electrode mixture layer 51 includes a negative electrode active material, a binding agent, and, if necessary, a conductive agent. The negative electrode 12 can be fabricated by coating a surface of the negative electrode core 50 with a negative electrode mixture slurry containing the negative electrode active material, the binding agent, and the like, letting the coating film dry, and then compressing the negative electrode core 50 to form the negative electrode mixture layer 51 on both surfaces of the negative electrode core 50.

The negative electrode mixture layer 51 preferably contains a carbon material and a silicon-containing material as the negative electrode active material. The inclusion of the silicon-containing material facilitates both high capacity and excellent cycle characteristics. For example, as the negative electrode active material, a material containing at least one of an element such as Sn that alloys with Li and a material containing the element may be used in the negative electrode mixture layer 51.

From the viewpoint of high capacity, a content of the silicon-containing material is preferably greater than or equal to 15% by mass of the total mass of the negative electrode active material, more preferably greater than or equal to 20% by mass, and even more preferably greater than or equal to 25% by mass. In general, silicon-containing materials have a larger volume change during charging and discharging than carbon materials. Therefore, when containing a silicon-containing material as the negative electrode active material, stress inside the battery increases more after repeated charging and discharging and deformation of the electrode plates is more pronounced. Although details will be provided later, in the present embodiment, since the coefficient of static friction of the surface of the separator 13 that opposes a surface (first surface) 11A (refer to FIG. 2) of the positive electrode 11 on the winding inner side is greater than the coefficient of static friction of the surface of the separator 13 that opposes a surface (second surface) 11B (refer to FIG. 2) of the positive electrode 11 on the winding outer side, a force of friction on the first surface 11A of the positive electrode 11 and a force of friction on the second surface 11B of the positive electrode 11 can be brought close to each other. As a result, deformation of electrode plates attributable to a difference in forces of friction between the first surface 11A and the second surface 11B of the positive electrode 11 caused by charging and discharging is suppressed. Accordingly, an effect of the present disclosure becomes more pronounced when including a silicon-containing material as the negative electrode active material. An upper limit of a content of the silicon-containing material is, for example, 70 mass% with respect to a total mass of the negative electrode active material.

A carbon material that serves as the negative electrode active material is, for example, at least one selected from the group consisting of natural graphite, artificial graphite, soft carbon, and hard carbon. Among these materials, as the carbon material, at least an artificial graphite such as massive artificial graphite (MAG) and graphitized mesophase carbon microbeads (MCMB), a natural graphite such as scale-like graphite, lump graphite, and earthy graphite, or a mixture of these materials are preferably used. A volume-based D50 of the carbon material is, for example, greater than or equal to 1 µm and less than or equal to 30 µm, and preferably greater than or equal to 5 µm and less than or equal to 25 µm.

The silicon-containing material may be any material that contains Si, and examples include silicon alloys, silicon compounds, and Si-containing composite materials. Among these materials, Si-containing composite materials are preferable. The D50 of composite materials is generally smaller than the D50 of graphite. A volume-based D50 of the carbon material is, for example, greater than or equal to 1 µm and less than or equal to 15 µm. Note that one of these materials may be used independently or two or more of these materials may be used in combination in the silicon-containing material.

A suitable silicon-containing material (composite material) is composite particles containing an ion-conducting phase, a Si phase dispersed in the ion-conducting phase, and a conductive layer covering the surface of the ion-conducting phase. The ion-conducting phase is, for example, at least one selected from the group consisting of a silicate phase, an amorphous carbon phase, a silicide phase, and a silicon oxide phase. The Si phase is formed by Si dispersed in the form of fine particles. The ion-conducting phase is a continuous phase comprising a finer set of particles than the Si phase. The conductive layer comprises a material with higher conductivity than the ion-conducting phase and forms a favorable conductive path in the negative electrode mixture layer 51.

An example of a suitable composite material containing Si is composite particles that have a sea-island structure with fine Si dispersed approximately uniformly in an amorphous silicon oxide phase and is represented as a whole by the general formula SiOₓ (0 < x ≤ 2). A main component of silicon oxide may be silicon dioxide. A content ratio (x) of oxygen to Si is, for example, 0.5 ≤ x < 2.0, and preferably 0.8 ≤ x ≤ 1.5.

In a similar manner to the positive electrode mixture layer 41, although fluorine-containing resin, PAN, polyimide, acrylic resin, polyolefin, and the like can be used for the binding agent included in the negative electrode mixture layer 51, styrene butadiene rubber (SBR) is preferably used. In addition, the negative electrode mixture layer 51 preferably contains CMC or its salts, polyacrylic acid (PAA) or its salts, polyvinyl alcohol (PVA), or the like. In particular, suitably, SBR is used in combination with CMC or its salts, PAA or its salts, or the like. The negative electrode mixture layer 51 may include a conductive agent such as CNT.

### [Separator]

As shown in FIGS. 1 and 2, the separator 13 is arranged between the positive electrode 11 and the negative electrode 12 and prevents the positive electrode 11 and the negative electrode 12 from coming into contact with each other and short-circuits from occurring. For example, a porous sheet with ion permeability and insulation properties is used as the separator 13. Specific examples of the porous sheet include microporous thin films, woven fabrics, and non-woven fabrics. Although a material of the porous sheet is not particularly limited, examples thereof include polyolefins (PAOs) such as polyethylene, polypropylene, and copolymers of polyethylene and alpha olefin, acrylic resins, polystyrene, polyester, cellulose, polyimide, polyphenylene sulfide (PPS), polyether ether ketone (PEEK), and fluororesins. Note that in the present embodiment, the separator 13 has a single-layer structure as shown in FIG. 2.

The separator 13 includes the first separator 31 that opposes the first surface 11A of the positive electrode 11 and the second separator 32 that opposes the second surface 11B of the positive electrode 11. In other words, a surface (winding outer surface) 31B of the first separator 31 on the winding outer side is in contact with the first surface 11A of the positive electrode 11 and a surface (winding inner surface) 32A of the second separator 32 on the winding inner side is in contact with the second surface 11B of the positive electrode 11. Thicknesses of the first separator 31 and the second separator 32 may be approximately the same or may differ from each other. In the present embodiment, the first separator 31 and the second separator 32 have approximately the same thickness. The thickness of the first separator 31 and the second separator 32 is preferably greater than or equal to 3 µm and less than or equal to 20 µm and more preferably greater than or equal to 5 µm and less than or equal to 15 µm.

If the coefficient of static friction of the winding outer surface 31B of the first separator 31 is denoted by µ_{31B} and the coefficient of static friction of the winding inner surface 32A of the second separator 32 is denoted by µ_{32A}, then a ratio (µ_{31B}/µ_{32A}) of the coefficient of static friction µ_{31B} to the coefficient of static friction µ_{32A} is greater than or equal to 1.3. Setting µ_{31B}/µ_{32A} to greater than or equal to 1.3 enables a force of friction on the first surface 11A of the positive electrode 11 and a force of friction on the second surface 11B of the positive electrode 11 during charging and discharging to be brought close to each other. As a result, deformation of electrode plates attributable to a difference in the forces of friction between the first surface 11A and the second surface 11B of the positive electrode 11 caused by charging and discharging can be suppressed.

In addition, µ_{31B}/µ_{32A} is preferably greater than or equal to 1.32 and more preferably greater than or equal to 1.35. In this case, the force of friction on the first surface 11A of the positive electrode 11 and the force of friction on the second surface 11B of the positive electrode 11 during charging and discharging can be brought closer to each other. Furthermore, µ_{31B}/µ_{32A} is preferably less than or equal to 5.0 and more preferably less than or equal to 3.0. When µ_{31B}/µ_{32A} becomes greater than 5.0, the force of friction on the first surface 11A of the positive electrode 11 may become greater than the force of friction on the second surface 11B of the positive electrode 11 during charging and discharging.

The coefficients of static friction µ_{31B} and µ_{32A} of the winding outer surface 31B of the first separator 31 and the winding inner surface 32A of the second separator 32 are, for example, greater than or equal to 0.3 and less than or equal to 1.0. Note that the coefficients of static friction described above are values measured in accordance with a method described in JIS K7125:1999 "Plastics-Film and sheeting - Determination of the coefficients of friction".

Methods of changing the coefficients of static friction µ_{31B} and µ_{32A} of the winding outer surface 31B of the first separator 31 and the winding inner surface 32A of the second separator 32 include changing materials of the first separator 31 and the second separator 32 and changing surface treatment processing. In the present embodiment, by using porous sheets made of different materials for the first separator 31 and the second separator 32, the coefficient of static friction of the first separator 31 is made greater than the coefficient of static friction of the second separator 32.

In addition, if the coefficient of static friction of a winding inner surface 31A of the first separator 31 is denoted by µ_{31A} and the coefficient of static friction of a winding outer surface 32B of the second separator 32 is denoted by µ_{32B}, µ_{31A} and µ_{32B} may be the same or may differ from each other. As described above, in the present embodiment, the first separator 31 and the second separator 32 have single-layer structures and are constituted of porous sheets of materials that differ from each other. Therefore, the coefficient of static friction µ_{31A} of the winding inner surface 31A and the coefficient of static friction µ_{31B} of the winding outer surface 31B of the first separator 31 are approximately the same if opposite electrode plates are the same, and the coefficient of static friction µ_{32A} of the winding inner surface 32A and the coefficient of static friction µ_{32B} of the winding outer surface 32B of the second separator 32 are approximately the same if opposite electrode plates are the same. Note that in the present specification, coefficients of static friction being approximately the same means that the difference between the coefficients of static friction is around a degree of variation during measurement of the coefficients of static friction such as the difference between the coefficients of static friction being within 10%.

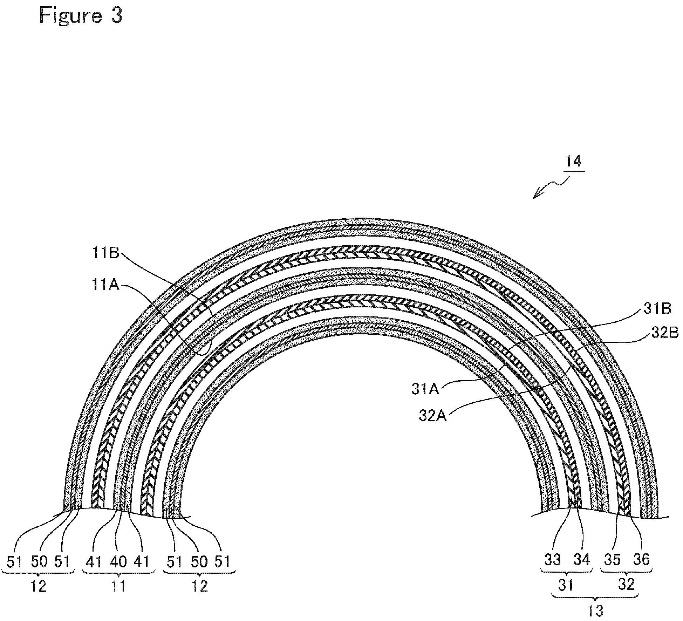

In addition, as shown in FIG. 3, the first separator 31 and the second separator 32 may have a laminated structure made up of a plurality of porous layers of which surfaces have different coefficients of static friction. In the example shown in FIG. 3, the first separator 31 and the second separator 32 have a laminated structure made up of two porous layers of which surfaces have different coefficients of static friction. More specifically, the first separator 31 includes a first porous layer 33 and a second porous layer 34 that is provided on a winding outer surface of the first porous layer 33 and of which a surface has a greater coefficient of static friction than the first porous layer 33. In addition, the second separator 32 includes a first porous layer 35 and a second porous layer 36 that is provided on a winding outer surface of the first porous layer 35 and of which a coefficient of static friction is greater than that of the first porous layer 35. A ratio of thickness between the first porous layers 33 and 35 and the second porous layers 34 and 36 is not particularly limited and, for example, the ratio of thickness ranges from 5:95 to 95:5. Furthermore, the ratio of thickness between the first porous layers 33 and 35 and the second porous layers 34 and 36 may be the same between the first separator 31 and the second separator 32 or may differ from each other. In the example shown in FIG. 3, the ratios of thickness between the first porous layers 33 and 35 and the second porous layers 34 and 36 of the first separator 31 and the second separator 32 are both 50:50.

In addition, in the example shown in FIG. 3, the first separator 31 and the second separator 32 are constituted of the same material. In other words, the first porous layer 33 and the first porous layer 35 are constituted of the same material and the second porous layer 34 and the second porous layer 36 are constituted of the same material. As a result, if opposite electrode plates are the same, the coefficient of static friction µ_{31A} of the winding inner surface 31A of the first separator 31 and the coefficient of static friction µ_{32A} of the winding inner surface 32A of the second separator 32 are approximately the same and the coefficient of static friction µ_{31B} of the winding outer surface 31B of the first separator 31 and the coefficient of static friction µ_{32B} of the winding outer surface 32B of the second separator 32 are approximately the same. Since opposite electrode plates are actually different, constructing the first separator 31 and the second separator 32 from the same material enables the configuration of the secondary battery according to the present disclosure to be realized with only one type of separator 13 and enables productivity to be improved.

Materials that constitute the first porous layers 33 and 35 and the second porous layers 34 and 36 are not particularly limited as long as the materials differ from each other and, as described above, examples of the materials include polyolefins such as polyethylene, polypropylene, and copolymers of polyethylene and alpha olefin, acrylic resins, polystyrene, polyester, cellulose, polyimide, polyphenylene sulfide, polyether ether ketone, and fluororesins.

In addition, one of the first porous layers 33 and 35 and the second porous layers 34 and 36 may be a heat-resistant layer containing a filler and a binder. Examples of the filler include metal oxide particles such as aluminum oxide, metal nitride particles, metal fluoride particles, metal carbide particles, and sulfide particles. These fillers may be used independently or two or more of these fillers may be used in combination. Examples of the binder include fluorine-based resins such as polyvinylidene fluoride (PVDF) and polytetrafluoroethylene (PTFE), polyimide-based resins, polyamide-based resins, acrylic resins, polyolefin-based resins, styrene butadiene rubber (SBR), nitrile butadiene rubber (NBR), carboxymethyl cellulose (CMC) or its salts, polyacrylic acid (PAA) or its salts, and polyvinyl alcohol (PVA). These binders may be used independently or two or more of these binders may be used in combination.

Alternatively, the first porous layer 33 and the first porous layer 35 may be constituted of different materials and the second porous layer 34 and the second porous layer 36 may be constituted of different materials. In this case, the coefficient of static friction µ_{31A} of the winding inner surface 31A of the first separator 31 and the coefficient of static friction µ_{32A} of the winding inner surface 32A of the second separator 32 differ from each other. In addition, the coefficient of static friction µ_{31B} of the winding outer surface 31B of the first separator 31 and the coefficient of static friction µ_{32B} of the winding outer surface 32B of the second separator 32 also differ from each other.

Note that while the first separator 31 and the second separator 32 have a single-layer structure or a laminated structure made up of two layers in the embodiment described above, the laminated structure is not limited thereto. For example, the first separator 31 and the second separator 32 may have a laminated structure made up of three or more porous layers. In addition, the number of layers of the first separator 31 and the number of layers of the second separator 32 may differ from each other. For example, the first separator 31 may have a single-layer structure and the second separator 32 may have a laminated structure made up of two porous layers.

### EXAMPLES

While the present disclosure will be described below in greater detail by citing examples, it is to be understood that the present disclosure is not limited to the following examples.

### <Example 1>

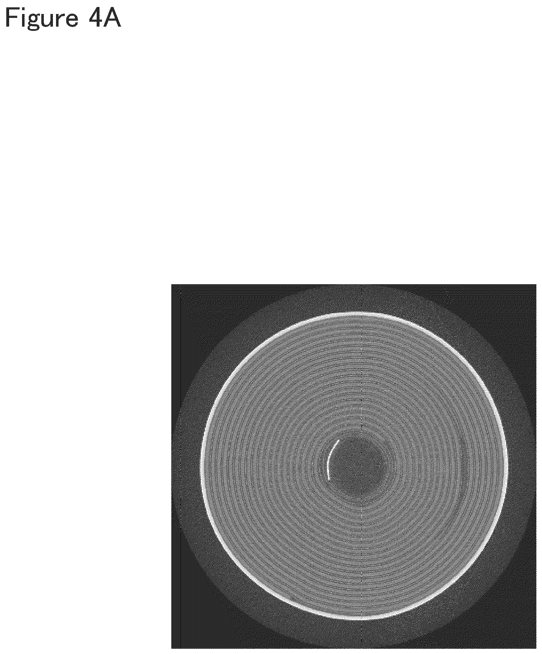

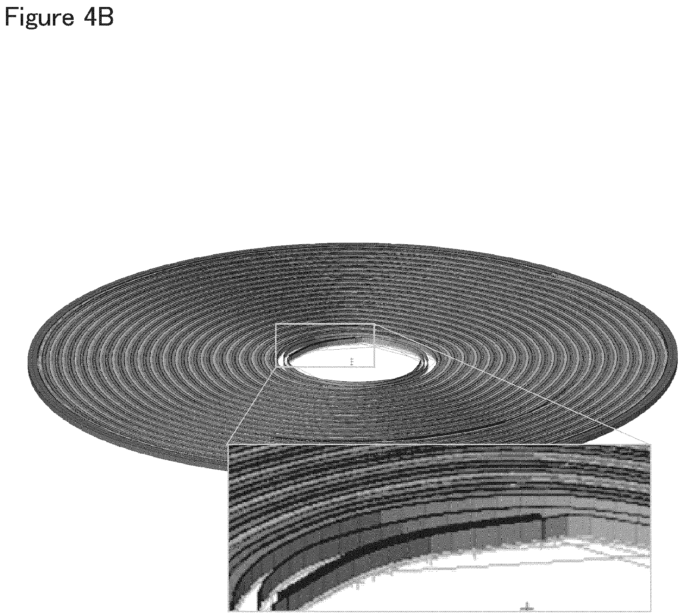

A calculation model of a cylindrical battery comprising a wound electrode body was created from X-ray CT images of a cross-sectional shape, and the deformation of electrode plates during negative electrode expansion was evaluated by computer simulation using the calculation model. More specifically, as shown in FIG. 4A, X-ray CT photography of the cross-sectional shape of the cylindrical battery was performed using inspeXio SMX-255CT FPD HR manufactured by Shimadzu Corporation. In addition, image data corresponding to an X-ray CT image was fabricated on a computer using SpaceCaim. Furthermore, as shown in FIG. 4B, meshing of the fabricated image data was performed using HyperWorks to fabricate a calculation model comprising a wound electrode assembly including a separator with a single-layer structure. Fabricating a calculation model from an X-ray CT image of a cross-sectional shape of an actual cylindrical battery enables a roundness of the electrode assembly, gaps between electrode plates, and the like to be faithfully reproduced and enables accuracy of the simulation to be improved.

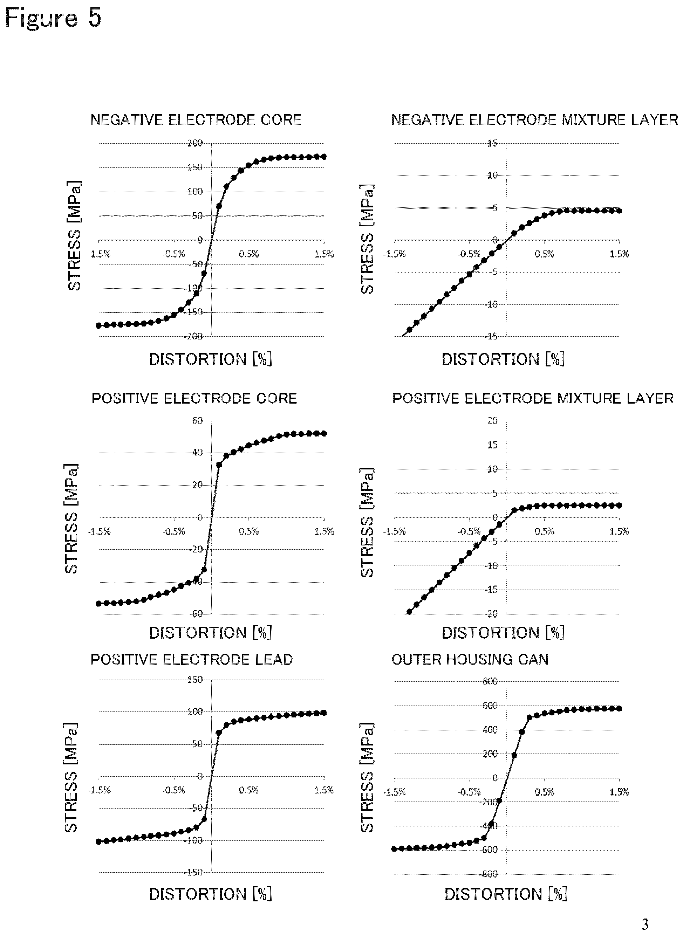

As parameters of the calculation model, the coefficient of static friction (µ₁) of the winding outer surface of the first separator in contact with the surface of the positive electrode on the winding inner side was set to 0.65 and the coefficient of static friction (µ₂) of the winding inner surface of the second separator in contact with the surface of the positive electrode on the winding outer side was set to 0.50. In other words, a ratio (µ₁/µ₂) of the coefficient of static friction (µ₁) of the winding outer surface of the first separator to the coefficient of static friction (µ₂) of the winding inner surface of the second separator was set to 1.3. In addition, physical property values of the positive electrode, the negative electrode, and the outer housing can used in the calculation model are as shown in FIG. 5.

In addition, the presence or absence of deformation of the electrode plates was evaluated while increasing a thickness of the negative electrode mixture layer in the fabricated calculation model using AdventureCluster. Performing calculations while increasing the thickness of the negative electrode mixture layer enables stress and displacement at each position of the electrode assembly when the negative electrode mixture layer expands during charging and discharging to be calculated and enables an effect on the deformation of the electrode assembly to be reproduced. In other words, in the present simulation, a battery with a structure that does not cause deformation of the electrode plates even when the thickness of the negative electrode mixture layer increases significantly can be said to be a battery in which deformation of the electrode plates due to expansion of the negative electrode mixture layer during charging and discharging is unlikely to occur.

### <Examples 2 to 4, Comparative Examples 1 to 4>

Calculation models were created with µ₁ and µ₂ as parameters of the calculation models with the values in Table 1. For each calculation model, a calculation was performed under similar conditions to Example 1 to evaluate the presence or absence of deformation of the electrode plates.

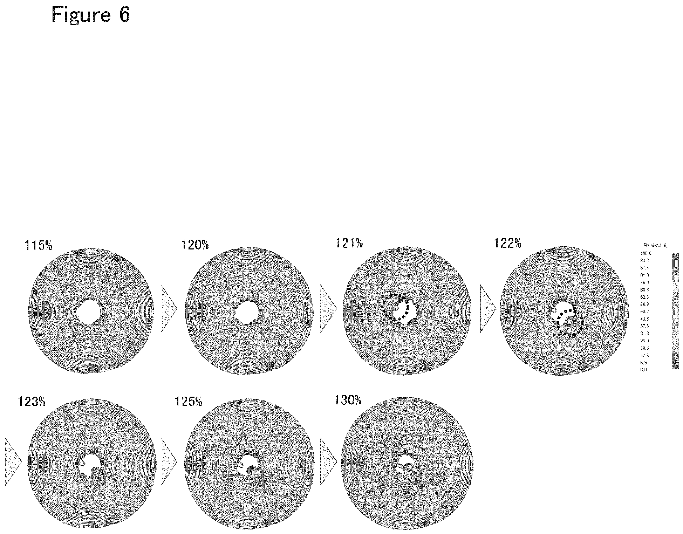

FIG. 6 shows an example of a result obtained by the present simulation. FIG. 6 shows the deformation of the electrode plates when the thickness of the negative electrode mixture layer is increased to 115% to 130% if an initial thickness of the negative electrode mixture layer is 100% in the calculation model of Comparative Example 1. As shown in FIG. 6, in the structure of Comparative Example 1, when the thickness of the negative electrode mixture layer is 115% and 120%, no deformation of the electrode plates occurs. On the other hand, when the thickness of the negative electrode mixture layer is 121%, the electrode plates are deformed at an upper left portion of a winding core equivalent of the electrode assembly (portion indicated by dotted line in FIG. 6). In other words, in the structure of Comparative Example 1, an allowable range of the thickness of the negative electrode mixture layer can be said to be up to 120%. In addition, when the thickness of the negative electrode mixture layer is 122%, the electrode plates are also deformed at a lower right portion of a winding core equivalent (portion indicated by dotted line in FIG. 6).

Table 1 shows the presence or absence of an occurrence of deformation of the electrode plates when the thickness of the negative electrode mixture layer is increased to 115% to 124% if the initial thickness of the negative electrode mixture layer is 100% in the calculation models of Examples 1 to 4 and Comparative Examples 1 to 4. In Table 1, "(cross mark)" denotes a case where deformation of the electrode plates occurred and "(circle)" denotes a case where deformation of the electrode plates did not occur.

**[Table 1]**

| | Coefficient of static friction | | | Thickness of negative electrode mixture layer | | | | | | | |
|---|---|---|---|---|---|---|---|---|---|---|---|
| | µ₁ | µ₂ | µ₁/µ₂ | 115% | 117% | 118% | 120% | 121% | 122% | 123% | 124% |
| Example 1 | 0.65 | 0.50 | 1.3 | ○ | ○ | ○ | ○ | ○ | × | × | × |
| Example 2 | 0.70 | 0.50 | 1.4 | ○ | ○ | ○ | ○ | ○ | × | × | × |
| Example 3 | 1.50 | 0.50 | 3.0 | ○ | ○ | ○ | ○ | ○ | ○ | ○ | × |
| Example 4 | 2.50 | 0.50 | 5.0 | ○ | ○ | ○ | ○ | ○ | ○ | ○ | ○ |
| Comparative example 1 | 0.50 | 0.50 | 1.0 | ○ | ○ | ○ | ○ | × | × | × | × |
| Comparative example 2 | 0.30 | 0.50 | 0.6 | ○ | ○ | × | × | × | × | × | × |
| Comparative example 3 | 0.60 | 0.50 | 1.2 | ○ | ○ | ○ | ○ | × | × | × | × |
| Comparative example 4 | 0.50 | 0.70 | 0.7 | ○ | ○ | ○ | ○ | × | × | × | × |

As shown in Table 1, in the structures of Examples 1 to 4 in which the ratio (µ₁/µ₂) of the coefficient of static friction of the winding outer surface of the first separator to the coefficient of static friction of the winding inner surface of the second separator is greater than or equal to 1.3, no deformation of the electrode plates had occurred even when the thickness of the negative electrode mixture layer was increased to 121%. On the other hand, in the structure of each of the comparative examples, deformation of the electrode plates had occurred when the thickness of the negative electrode mixture layer was 121%. In other words, it can be said that setting µ₁/µ₂ to greater than or equal to 1.3 enables a secondary battery that can suppress the deformation of the electrode plates caused by the expansion of the negative electrode mixture layer during charging and discharging to be provided.

The present disclosure is further illustrated by the following embodiments.

Configuration 1: A secondary battery comprising a wound electrode assembly in which a positive electrode and a negative electrode are wound around a separator, wherein the separator includes a first separator that opposes a first surface of the positive electrode on a winding inner side and a second separator that opposes a second surface of the positive electrode on a winding outer side, and a ratio of a coefficient of static friction of a surface of the first separator on the winding outer side in contact with the first surface of the positive electrode to a coefficient of static friction of a surface of the second separator on the winding inner side in contact with the second surface of the positive electrode is greater than or equal to 1.3.

Configuration 2: The secondary battery according to Configuration 1, wherein the first separator and the second separator are constituted of a same material and each have a first porous layer and a second porous layer in which coefficients of static friction of surfaces differ from each other, the first separator is arranged so that the first porous layer opposes the first surface of the positive electrode, and the second separator is arranged so that the second porous layer opposes the second surface of the positive electrode.

Configuration 3: The secondary battery according to Configuration 1, wherein the first separator and the second separator are constituted of materials of types that differ from each other.

Configuration 4: The secondary battery according to Configuration 3, wherein at least one of the first separator and the second separator has a laminated structure made up of a plurality of porous layers with different coefficients of static friction of surfaces, and a coefficient of static friction of a surface of the first separator on a winding outer side and a coefficient of static friction of a surface of the second separator on a winding outer side differ from each other.

Configuration 5: The secondary battery according to any one of Configurations 1 to 4, wherein a ratio of a coefficient of static friction of a surface of the first separator on the winding outer side in contact with the first surface of the positive electrode to a coefficient of static friction of a surface of the second separator on the winding inner side in contact with the second surface of the positive electrode is greater than or equal to 1.3 and less than or equal to 5.0.

Configuration 6: The secondary battery according to any one of Configurations 1 to 5, wherein a coefficient of static friction of a surface of the first separator on the winding outer side is greater than or equal to 0.3.

Configuration 7: The secondary battery according to any one of Configurations 1 to 6, wherein a coefficient of static friction of a surface of the first separator on the winding outer side is greater than or equal to 0.3 and less than or equal to 1.0.

Configuration 8: The secondary battery according to any one of Configurations 1 to 7, wherein the negative electrode includes a negative electrode core and a negative electrode mixture layer provided on the negative electrode core, and the negative electrode mixture layer includes a silicon-containing material as a negative electrode active material.

Configuration 9: The secondary battery according to Configuration 8, wherein a content of the silicon-containing material is greater than or equal to 15 mass% with respect to a total mass of the negative electrode active material.

Configuration 10: The secondary battery according to Configuration 8, wherein a content of the silicon-containing material is greater than or equal to 15 mass% and less than or equal to 70 mass% with respect to a total mass of the negative electrode active material.

### REFERENCE SIGNS LIST

10 Secondary battery (cylindrical battery), 11 Positive electrode, 11A Winding inner surface, 11B Winding outer surface, 12 Negative electrode, 13 Separator, 14 Electrode assembly, 15 Insulating plate, 16 Insulating plate, 17 Positive electrode lead, 18 Negative electrode lead, 19 Sealing assembly, 20 Outer housing can, 21 Bottom portion, 22 Side wall portion, 23 Grooved portion, 24 Internal terminal plate, 24A Outer circumferential portion, 24B Central portion, 24C Vent hole, 25 Insulating member, 25A Opening portion, 25B Vent hole, 26 Rupture plate, 26A Valve portion, 27 Gasket, 31 First separator, 31A, 32A Winding inner surface, 31B, 32B Winding outer surface, 32 Second separator, 33, 35 First porous layer, 34, 36 Second porous layer, 40 Positive electrode core, 41 Positive electrode mixture layer, 50 Negative electrode core, 51 Negative electrode mixture layer.

## Claims

1. A secondary battery comprising:
a wound electrode assembly in which a positive electrode and a negative electrode are wound around a separator, wherein
the separator includes a first separator that opposes a first surface of the positive electrode on a winding inner side and a second separator that opposes a second surface of the positive electrode on a winding outer side, and
a ratio of a coefficient of static friction of a surface of the first separator on the winding outer side in contact with the first surface of the positive electrode to a coefficient of static friction of a surface of the second separator on the winding inner side in contact with the second surface of the positive electrode is greater than or equal to 1.3.

2. The secondary battery according to claim 1, wherein
the first separator and the second separator are constituted of a same material and each have a first porous layer and a second porous layer in which coefficients of static friction of surfaces differ from each other,
the first separator is arranged so that the first porous layer opposes the first surface of the positive electrode, and
the second separator is arranged so that the second porous layer opposes the second surface of the positive electrode.

3. The secondary battery according to claim 1, wherein the first separator and the second separator are constituted of materials of types that differ from each other.

4. The secondary battery according to claim 3, wherein at least one of the first separator and the second separator has a laminated structure made up of a plurality of porous layers with different coefficients of static friction of surfaces, and a coefficient of static friction of a surface of the first separator on a winding outer side and a coefficient of static friction of a surface of the second separator on a winding outer side differ from each other.

5. The secondary battery according to claim 1, wherein a ratio of a coefficient of static friction of a surface of the first separator on the winding outer side in contact with the first surface of the positive electrode to a coefficient of static friction of a surface of the second separator on the winding inner side in contact with the second surface of the positive electrode is greater than or equal to 1.3 and less than or equal to 5.0.

6. The secondary battery according to claim 1, wherein a coefficient of static friction of a surface of the first separator on the winding outer side is greater than or equal to 0.3.

7. The secondary battery according to claim 1, wherein a coefficient of static friction of a surface of the first separator on the winding outer side is greater than or equal to 0.3 and less than or equal to 1.0.

8. The secondary battery according to claim 1, wherein
the negative electrode includes a negative electrode core and a negative electrode mixture layer provided on the negative electrode core, and
the negative electrode mixture layer includes a silicon-containing material as a negative electrode active material.

9. The secondary battery according to claim 8, wherein a content of the silicon-containing material is greater than or equal to 15 mass% with respect to a total mass of the negative electrode active material.

10. The secondary battery according to claim 8, wherein a content of the silicon-containing material is greater than or equal to 15 mass% and less than or equal to 70 mass% with respect to a total mass of the negative electrode active material.
